# EUROPEAN PATENT SPECIFICATION

(11) **EP 1 371 618 B1**
(45) Date of publication and mention of the grant of the patent: **22.01.2014**
(21) Application number: 03013179.1
(22) Date of filing: 11.06.2003
(51) Int. Cl.: C03C 25/50, C03C 25/48, C03C 25/10, C08L 5/08

(54) **Fiber for reinforcing rubber products and process for its production**
Faser zur Verstärkung von Gummiprodukten und Verfahren zur Herstellung
Fibre pour renforcer des produits en caoutchouc et procédé de fabrication

(30) Priority: 14.06.2002 JP 2002174522
(43) Date of publication of application: 17.12.2003
(73) Proprietor: OCV Intellectual Capital, LLC, Toledo, OH 43659 (US); HONDA GIKEN KOGYO KABUSHIKI KAISHA, Minato-ku, Tokyo 107-8556 (JP)
(72) Inventor: Ando, Kimihiro, Chiyoda-ku, Tokyo (JP); Watanabe, Shuji, Wako-shi, Saitama, (JP); Shimamura, Kaoru, Wako-shi, Saitama, (JP)
(74) Representative: Balmefrezol, Ludovic Francis Pierre

(56) References cited:
- EP-A- 0 937 740
- WO-A-00/42094
- US-A- 3 844 821
- US-A- 5 236 742
- US-A- 5 501 643
- US-A- 5 885 718

## Description

The present invention relates to fiber for reinforcing rubber products, which is used as a reinforcing material for various rubber products such as rubber tires or rubber belts including timing belts, and a process for its production.

It is common that reinforcing fiber to be used to increase the strength or durability of various rubber products such as rubber tires or rubber belts including timing belts, is coated with a coating film formed by a rubber type coating agent in order to increase the adhesion between the fiber and a rubber base material in a rubber product and in order to increase the durability of the rubber product by protecting the fiber itself. As such a rubber type coating agent, a coating agent comprising a condensate of resorcinol and formaldehyde, and a rubber latex, as the main components (hereinafter sometimes referred to as "RFL coating agent", or a coating agent having a rubber composition dissolved in an organic solvent (hereinafter sometimes referred to as "rubber cement") is known.

Particularly, a driving belt such as a timing belt to be used for an automobile engine is required to have durability under a severe condition such as a high temperature. Accordingly, the rubber as its base material is required to have heat resistance, and firm adhesion between the reinforcing fiber and the rubber is required. Accordingly, for a reinforcing fiber to be used for such a timing belt, it is known that fiber coated with a first coating film formed by the above-mentioned RFL coating agent, is further coated with a second coating film formed by the above-mentioned rubber cement.

For example, JP-A-1-156535 discloses rubber-reinforcing fiber in which the RFL coating agent is used as a coating agent to form the first coating film, and a coating agent comprising an organic diisocyanate, a chlorosulfonated polyethylene and an aromatic nitroso compound, is used as a rubber cement to form a second coating film on the first coating film.

Further, JP-A-11-241275 discloses rubber-reinforcing fiber, in which a coating agent comprising a water-soluble condensate of resorcinol and formaldehyde, and a rubber latex, is used as the RFL coating agent to form a first coating film, and a coating agent comprising a rubber blend, a vulcanizer and a maleimide type vulcanization assistant, is used as a rubber cement to form a second coating film.

Such conventional rubber-reinforcing fibers exhibit fairly firm adhesion to e.g. a chlorosulfonated polyethylene rubber or a chlorohydrin rubber among rubbers which can be base materials for rubber products. However, their adhesion may sometimes be insufficient to a rubber composition containing a hydrogenated nitrile rubber (hereinafter sometimes referred to as "H-NBR") as the main component, which is excellent in heat resistance or bending fatigue resistance and the demand of which has increased in recent years.

Particularly, they may show fairly good adhesion to a H-NBR rubber composition employing mainly sulfur as a vulcanizer, but their adhesion is insufficient to a H-NBR rubber composition employing a peroxide as a vulcanizer in order to increase the heat resistance. Accordingly, they have a problem that the heat resistance or bending fatigue resistance of a rubber product such as a timing belt to be finally obtainable, tends to be inadequate.

In order to solve such a problem, JP-A-7-190149 proposes to form a layer of a phenol resin modified by a component comprising phenol having a side chain having an unsaturated bond and/or phenol carboxylic acid, and a prescribed compound, as the outermost layer of a core wire (rubber-reinforcing fiber) to be embedded in a power transmission belt. However, with a rubber-reinforcing fiber having a modified phenol resin layer formed as the outermost layer, the phenol resin layer is poor in flexibility, which adversely affects the bending fatigue resistance of the obtainable timing belt. Further, in the process of handling the coated reinforcing fiber, partial peeling tends to occur, since the modified phenol resin layer is poor in flexibility.

Further, the rubber-reinforcing fiber disclosed in JP-A-7-190149 has a first coating film formed by the RFL coating agent and a second coating film formed by the rubber cement, inside of the modified phenol resin layer as the outermost layer, as disclosed in its Examples, whereby three coating steps are required. Such three coating steps being required, or the modified phenol resin being expensive as compared with a usual phenol resin, tends to increase the production cost of the rubber-reinforcing fiber.

The present invention has been made to solve the above-described problems, and it is an object of the present invention to provide fiber for reinforcing rubber products, which is excellent in adhesion to a rubber composition as a base material for a rubber product, particularly a rubber composition having H-NBR incorporated, especially a rubber composition having H-NBR incorporated, which uses a peroxide as a vulcanizer, whereby the bending fatigue resistance of the obtainable rubber product such as a timing belt can be made excellent, and whereby the production cost will not increase, since only two steps are required for coating treatment, and to provide a process for its production.

In order to solve the above problems, the fiber for reinforcing rubber products of the present invention comprises fiber having a first coating film formed by a first coating agent comprising a condensate of resorcinol and formaldehyde, and a rubber latex, wherein the fiber has a second coating film formed by a second coating agent comprising an uncured phenol resin and a rubber, on the first coating film.

Further, the process for producing fiber for reinforcing rubber products of the present invention, comprises impregnating fiber with a first coating agent comprising a condensate of resorcinol and formaldehyde, and a rubber latex, followed by drying to produce a coated fiber having a first coating film, then twisting the coated fiber to obtain a twisted yarn, and coating the twisted yarn with a second coating agent comprising an uncured phenol resin and a rubber, followed by drying to form a second coating film on the first coating film.

The fiber for reinforcing rubber products in the present invention, is based on the following two new findings. (1) The second coating film formed by the second coating agent comprising an uncured phenol resin and a rubber, has both flexibility and good adhesion to a rubber such as H-NBR, particularly to a rubber composition having H-NBR incorporated, which uses a peroxide as a vulcanizer. (2) The above second coating film has firm adhesion to the first coating film formed by the first coating agent comprising a condensate of resorcinol and formaldehyde, and a rubber latex, which has good adhesion to fiber. Thus, a rubber product, particularly a timing belt, reinforced by the reinforcing fiber of the present invention, has excellent bending fatigue resistance and heat resistance.

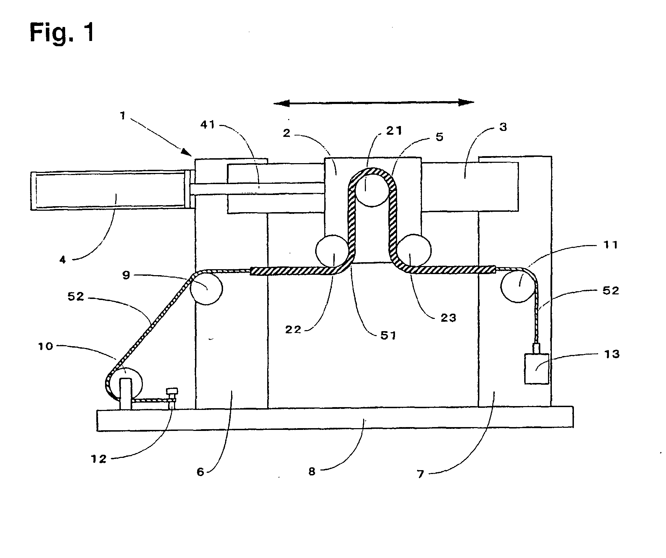

In the accompanying drawing, Fig. 1 is a schematic view illustrating the structure of a bending fatigue tester.

Now, the present invention will be described in detail with reference to the preferred embodiments. In the following description, "parts" means "parts by mass", and "%" means "mass%" unless otherwise specified.

Firstly, the first coating agent comprising a condensate of resorcinol and formaldehyde (hereinafter sometimes referred to as a "RF condensate"), and a rubber latex, will be described. The first coating agent comprises the RF condensate and a rubber latex. These components are uniformly mixed by using water as a medium, in accordance with a usual method.

As the RF condensate to be incorporated to the first coating agent, it is possible to use a water-soluble addition condensate of resorcinol and formaldehyde, rich in oxymethyl groups, obtained by reacting resorcinol and formaldehyde in the presence of an alkaline catalyst such as an alkali metal hydroxide, ammonia or amine. Particularly preferred is a RF condensate obtained by reacting resorcinol and formaldehyde in a molar ratio of from 1:0.3 to 1:2.5.

As the rubber latex to be incorporated to the first coating agent, a latex of a vinylpyridine/styrene/butadiene terpolymer, a latex of an acrylonitrile/butadiene copolymer, a latex of a modified acrylonitrile/butadiene copolymer, a latex of a styrene/butadiene copolymer, a latex of a dicarboxylated styrene/butadiene copolymer, a latex of polybutadiene or a latex of a halogen-containing polymer, may, for example, be used alone or in combination as a mixture of two or more of them. It is particularly preferred to use a mixture of a latex of a vinylpyridine/styrene/butadiene terpolymer and a latex of a halogen-containing polymer, since it is thereby possible to improve the heat resistance, bending fatigue resistance and water resistance of the finally obtainable rubber product such as a timing belt. The halogen-containing polymer in the above-mentioned halogen-containing polymer latex may, for example, be chlorinated rubber, chloroprene rubber or chlorosulfonated polyethylene. It is preferably chlorosulfonated polyethylene.

Further, as the rubber latex to be incorporated to the first coating agent, it is preferred to use a mixture of a latex of a vinylpyridine/styrene/butadiene terpolymer and a latex of an acrylonitrile/butadiene copolymer or a latex of a modified acrylonitrile/butadiene copolymer. In this case, the compatibility will be excellent between the first coating film formed by the first coating agent and the second coating film formed by the second coating agent which will be described hereinafter, and the overall adhesion among the first coating film, the second coating film and H-NBR as the base material can be more improved.

As the above-mentioned latex of a vinylpyridine/styrene/butadiene terpolymer, one commonly employed for the treatment of fiber for reinforcing rubber products, may be used. Particularly preferred is a latex obtained from a terpolymer wherein the proportion of vinylpyridine:styrene:butadiene is preferably 10-20:10-20:60-80. As such a terpolymer latex, Nipol-2518FS (tradename, manufactured by ZEON Corporation) or Pyratex (tradename, manufactured by Nippon A&L Inc.) may, for example, be preferably employed.

Further, the ratio of the RF condensate and the rubber latex in the first coating agent is preferably such that the RF condensate is preferably from 2 to 40 parts, particularly preferably from 5 to 15 parts, per 100 parts of the rubber latex. Further, in a case where the latex of a vinylpyridine/styrene/butadiene terpolymer and a latex of a halogen-containing polymer or an acrylonitrile/butadiene copolymer or a latex of a modified acrylonitrile/butadiene copolymer, is to be used, the latter latex is preferably from 10 to 100 parts, particularly preferably from 5 to 30 parts, per 100 parts of the former latex of a vinylpyridine/styrene/butadiene terpolymer. Here, the above content ratio of each component is a mass ratio as solid content.

Further, to the above first coating agent, in addition to the RF condensate and the rubber latex, other components which are incorporated in conventional RFL coating agent, may be incorporated, as the case requires. For example, components such as a latex stabilizer and an anti-aging agent, may be added. As the stabilizer, a non-ionic surfactant may, for example, be mentioned, and as the anti-aging agent, a liquid emulsified product of a mineral oil may, for example, be mentioned.

Further, the total content of solid components of the RF condensate, the rubber latex and other components added as the case requires, is preferably from 10 to 50%, more preferably from 20 to 40%. If this content is less than 10%, there may be a case where it is difficult to impregnate the fiber with a sufficient amount of the first coating agent. Further, if it exceeds 50%, the stability of the first coating agent deteriorates, and gelling tends to be likely.

Now, the second coating agent comprising an uncured phenol resin and a rubber, will be described. The second coating agent can be obtained by uniformly mixing an uncured phenol resin, a rubber and a solvent in accordance with a usual method. The uncured phenol resin to be incorporated to the second coating agent is one not yet cured, among resins obtainable from phenols and aldehydes, i.e. one having a reactivity to be cured. As such an uncured phenol resin, novolak and/or resol may preferably be mentioned. It is preferred to use novolak from such a viewpoint that the adhesion of the reinforcing fiber thereby obtained and H-NBR can thereby be increased, and it is preferred to use resol from such a viewpoint that the bonded state at the interface between the first coating film and the second coating film can be made excellent. Further, to utilize both of such merits, it is preferred to use novolak and resol in combination so that the ratio of novolak/resol would be from 10/4 to 10/1 as solid content.

As the rubber in the second coating agent, it is preferred to use a rubber having good affinity to the rubber composition taking into consideration of the compatibility with the rubber composition which will be the base material for the rubber product to be reinforced, such as a timing belt. Preferred examples include chloroprene rubber, chlorosulfonated polyethylene, an acrylonitrile/butadiene copolymer rubber (so-called "NBR") and H-NBR. Among them, it is preferred to use an acrylonitrile/butadiene copolymer rubber from the viewpoint that the adhesion to H-NBR can be made excellent, and the flexibility of the second coating film formed by the second coating agent can be made excellent.

Further, it is preferred to incorporate an uncured epoxy resin in addition to the above uncured phenol resin and the rubber, to the second coating agent, from the viewpoint that the adhesion between the obtainable reinforcing fiber and H-NBR, particularly the adhesion between the reinforcing fiber and H-NBR employing a peroxide as a vulcanizer, can be made excellent, and the excellent adhesion can be maintained even at the time of heating. This uncured epoxy resin is one which is still in an uncured state among epoxy resins, i.e. one having a reactivity to be cured. Such an epoxy resin may, for example, be a bisphenol A type epoxy resin, a bisphenol F type epoxy resin, a phenol novolak type epoxy resin or a cresol novolak type epoxy resin. Among them, a bisphenol A type epoxy resin is preferred from the viewpoint that the adhesion to H-NBR is particularly high.

With respect to the content ratio of the uncured phenol resin and the rubber in the second coating agent, the rubber is preferably from 10 to 60 parts, particularly preferably from 30 to 40 parts, per 100 parts of the uncured phenol resin. If the ratio of the rubber is smaller than 10 parts, the flexibility of the second coating film formed by the second coating agent tends to be poor in some cases. On the other hand, if it exceeds 60 parts, there may be an adverse effect to the adhesion between the fiber and the rubber composition to be the base material for the rubber products. Further, in a case where the uncured epoxy resin is to be incorporated, the uncured epoxy resin is preferably from 2 to 20 parts, particularly preferably from 5 to 10 parts, per 100 parts of the uncured phenol resin. If the content ratio of the epoxy resin is smaller than 2 parts, it tends to be difficult to obtain an effect of improving the adhesion between the fiber and the rubber composition to be the base material for the rubber products. On the other hand, if it exceeds 20 parts, the flexibility of the second coating film formed by the second coating agent tends to be poor in some cases. Here, the above content ratio of each component is a mass ratio as solid content.

To the second coating agent, an inorganic filler or an additive may be incorporated in addition to the above components, as the case requires. As the inorganic filler, one commonly used as a filler for a rubber composition, such as silica or carbon black, may be used. As the additive, a softening agent, an anti-aging agent, a vulcanization accelerator or the like, which is common as an additive for a rubber composition, may be used.

Further, as the solvent to dissolve or disperse the above respective components in the second coating agent, one or more in combination may be used among those which are used for conventional rubber cements. However, it is preferred to use a ketone type or ester type solvent. Preferred examples include methyl ethyl ketone (MEK), methyl isobutyl ketone (MIBK) and ethyl acetate.

Further, in the second coating agent, the total content of components such as the uncured phenol resin, the rubber and the uncured epoxy resin incorporated as the case require, is preferably from 3 to 20%, particularly preferably from 5 to 15%, as solid content. If such a concentration is less than 3%, it may sometimes be difficult to coat a sufficient amount of the second coating agent to the fiber. On the other hand, if it exceeds 20%, the stability of the second coating agent sometimes tends to be poor.

The fiber to be coated in the present invention can be used for a conventional rubber reinforcing fiber, which may be an inorganic fiber or organic fiber. As the inorganic fiber, glass fiber or carbon fiber may be used, and as the organic fiber, aramid fiber or PBO (polyparaphenylene benzoxazole) fiber may be used. To such fibers, it is preferred to preliminarily apply a binding agent or a sizing agent, prior to coating with the first coating agent, in order to improve the adhesion between the fiber itself and the first coating film formed by the first coating agent.

Among the above fibers, it is preferred to use glass fiber in view of the wide applicability, the cost and easy application to the process for producing timing belts. As such glass fiber, one obtained by bundling from 200 to 600 glass monofilaments having a diameter of from 7 to 9 µm, may, for example, be employed. Further, the composition of the glass fiber is not particularly limited, and E glass or S glass may, for example, be mentioned. Further, in the case of glass fiber, it is preferably subjected to pretreatment with a binding agent containing e.g. a known silane coupling agent or coating film-forming agent.

Now, a process for producing the fiber for reinforcing rubber products of the present invention will be described. However, it should be understood that the present invention is by no means limited to such a specific process.

Firstly, fiber to be coated, is continuously immersed in a bath filled with the first coating agent to have the first coating agent deposited and impregnated on the fiber. Then, the fiber was continuously heated in e.g. a hot air oven of from 200 to 350°C to dry and solidify the first coating agent to form a first coating film thereby to obtain coated fiber having the first coating film. Here, the deposited amount of the first coating film to the coated fiber is preferably from 12 to 25%, more preferably from 16 to 22%, as solid content, based on the mass of the coated fiber. If the deposited amount is less than 12%, individual glass monofilaments of the coated fiber tend to be hardly adequately covered by the first coating film, and the monofilaments are likely to contact one another and tend to be abraded by friction, so that bending fatigue resistance of the finally obtainable rubber belts, etc., tends to be low, such being undesirable. On the other hand, if the deposited amount exceeds 25%, the flexibility of the coating film tends to be poor, and the bending fatigue resistance of the finally obtainable rubber belts, etc., likely tends to be low, such being undesirable.

Then, the above coated fibers are, individually or in combination of a plurality of them, subjected to primary twisting by a twisting machine such as a ring twisting machine to obtain a primary twisted yarn. The number of twists in this primary twisting step is preferably from 0.5 to 4 twists/25 mm. Otherwise, the coated fiber once taken up in a non-twisted state, may be subjected to primary twisting to obtain a primary twisted yarn, or a take-up apparatus in the above step of obtaining a coated fiber is modified to be a twisting machine, so that a step of obtaining a coated fiber and a primary twisting step may be carried out simultaneously to obtain a primary twisted yarn.

Then, from 5 to 20 primary twisted yarns are put together and subjected to second twisting by means of a twisting machine such as a ring twisting machine or a flier twisting machine to obtain a second twisted yarn. The number of twists in this second twisting step is preferably from 0.5 to 4 twists/25 mm, and like in the conventional fiber for reinforcing rubber products, the twisting direction in the second twisting step is adjusted to be opposite to the twisting direction in the primary twisting step.

Finally, the above-mentioned second twisted yarn is continuously immersed in a bath filled with the above-mentioned second coating agent to have the second coating agent coated on the second twisted yarn. Then, the second twisted yarn is continuously heated in e.g. a hot air oven of from 120 to 200°C to dry and solidify the second coating agent to form a second coating film thereby to obtain the fiber for reinforcing rubber products of the present invention.

At that time, the deposited amount of the second coating film to the reinforcing fiber is preferably from 1 to 15%, more preferably from 3 to 10%, as solid content, based on the mass of the reinforcing fiber. If the deposited amount is less than 1%, the effect for increasing the adhesion between the reinforcing fiber and the rubber composition as the base material for rubber products is likely to be inadequate, and if the deposited amount exceeds 15%, the effect for increasing the adhesion will not increase so much, and the adhesion may rather be hindered.

Now, the present invention will be described in further detail with reference to Examples. However, it should be understood that the present invention is by no means restricted to such specific Examples.

### EXAMPLE 1

100 Parts of a latex of a vinylpyridine/styrene/butadiene terpolymer ("Pyratex", tradename, manufactured by Nippon A&L Inc.), 17.2 parts of a latex of a chlorosulfonated polyethylene ("CSM450", tradename, manufactured by Sumitomo Seika Chemical Co., Ltd.) both as a rubber latex, 5.3 parts of a RF condensate (solid content: 7%) and deionized water, were mixed to obtain a first coating agent having a concentration of 30%. Here, the above ratio of each component is a mass ratio as solid content.

200 Glass monofilaments made of high strength glass (S glass) and having a diameter of 7 µm, were bundled while applying a binding agent containing an amino silane coupling agent as the main component, followed by drying to obtain a glass fiber. Three such glass fibers drawn together were continuously immersed in a bath filled with the above-mentioned first coating agent to have the first coating agent deposited and impregnated on the glass fibers. Then, the glass fibers are continuously heated for one minute in a hot air oven at a temperature of 250°C to dry and solidify the first coating agent, to obtain coated glass fibers having a first coating film. Here, the deposited amount of the first coating agent was 18% as solid content based on the mass of the coated glass fibers.

Further, the above coated glass fibers were individually subjected to primary twisting by means of a ring twisting machine so that the number of twists became 2 twists/25 mm to obtain primary twisted yarns. Then, 11 such primary twisted yarns drawn together, were subjected to second twisting by means of a separate ring twisting machine in a twisting direction opposite to the primary twisting so that the number of twists became 2 twists/25 mm, to obtain second twisted yarns.

Then, 60 parts of novolak, 40 parts of resol both as an uncured phenol resin, 35 parts of an acrylonitrile/butadiene copolymer rubber as a rubber, 7 parts of a bisphenol A type epoxy resin as an uncured epoxy resin, and the following solvent, were mixed to obtain a second coating agent having a concentration of 10%. Here, the above ratio of each component is a ratio as solid content. Further, as the above solvent, one obtained by mixing methyl isobutyl ketone, methyl ethyl ketone and ethyl acetate in a mass ratio of 8:1:4, was used.

The second twisted yarns obtained as described above, were continuously immersed in a bath filled with the above-mentioned second coating agent to have the second coating agent coated and deposited on the second twisted yarns. Then, the second twisted yarns were continuously heated for one minute in a hot air oven at a temperature of 130°C to dry and solidify the second coating agent to form a second coating film thereby to obtain the fiber for reinforcing rubber products of the present invention. Here, the deposited amount of the second coating agent was 7% as solid content based on the mass of the reinforcing fiber.

### EXAMPLE 2

The fiber for reinforcing rubber products of the present invention was obtained by using the same glass fiber and first coating agent as used in Example 1 by the process under the same conditions as in Example 1, except that a second coating agent having a concentration of 10% obtained by mixing 60 parts of novolak, 40 parts of resol both as an uncured phenol resin, 35 parts of an acrylonitrile/butadiene copolymer rubber as a rubber and the solvent, was employed.

### EXAMPLE 3

100 Parts of a latex of a vinylpyridine/styrene/butadiene terpolymer ("Pyratex", tradename, manufactured by Nippon A&L Inc.), 16.8 parts of a latex of an acrylonitrile/butadiene copolymer ("NIPOL1562", tradename, manufactured by ZEON Corporation), 5.3 parts of a RF condensate (solid content: 7%) and deionized water, were mixed to obtain a first coating agent having a concentration of 30%. Here, the above ratio of each component is a mass ratio as solid content.

The fiber for reinforcing rubber products of the present invention was obtained by using the same glass fiber and second coating agent as used in Example 1 by the process under the same conditions as in Example 1 except that the above first coating agent was employed.

### EXAMPLE 4

The fiber for reinforcing rubber products of the present invention was obtained by using the same first coating agent as used in Example 3, the same second coating agent as used in Example 2 and the same glass fiber as used in Example 1 by the process under the same conditions as in Example 1.

### COMPARATIVE EXAMPLE 1

The fiber for reinforcing rubber products, was obtained by using the same glass fiber and first coating agent as used in Example 1 by the process under the same conditions as in Example 1, except that a second coating agent having a concentration of 10%, obtained by mixing 10 parts of a chlorosulfonated polyethylene ("Hypalon 40", tradename, manufactured by DuPont Dow Elastomers L.L.C.), 5 parts of polyisocyanate ("MR-200", tradename, manufactured by Nippon Polyurethane Industry Co., Ltd.), 2 parts of p,p'-dibenzoylbenzoquinone dioxime as a vulcanizer, 5 parts of carbon black as an inorganic filler and toluene as a solvent, was employed.

### COMPARATIVE EXAMPLE 2

A modified phenol resin ("Sumilite Resin PR12687", tradename, manufactured by Sumitomo Bakelite Co., Ltd.) was mixed with methyl ethyl ketone as a solvent and dissolved to obtain a third coating agent having a concentration of 25%.

The reinforcing fiber obtained in Comparative Example 1 was continuously immersed in a bath filled with the above-mentioned third coating agent, to have the third coating agent coated and deposited on the reinforcing fiber. Then, the reinforcing fiber was continuously heated for 1 minute in a hot air oven at a temperature of 130°C to dry and solidify the third coating agent to form a third coating film thereby to obtain the fiber for reinforcing rubber products. Here, the deposited amount of the third coating agent was 2% as solid content based on the mass of the reinforcing fiber.

### TEST EXAMPLES

With respect to the respective fibers for reinforcing rubber products obtained in the above Examples 1 to 4 and Comparative Examples 1 and 2, evaluation of the adhesion and the bending fatigue resistance was carried out by the following methods, with respect to rubber products using a rubber composition having the following composition, as the base material. The results are shown in Table 1.

### Rubber composition:

Hydrogenated nitrile rubber (Zetpol 2000, tradename, manufactured by ZEON Corporation):100 parts, zinc oxide:10 parts, zinc methacrylate:15 parts, a zinc salt of 2-mercaptobenzimidazole:1 part, substituted diphenylamine:1 part, carbon black [HAF]:3 parts, silica hydrate:30 parts, dicumyl peroxide:10 parts, 1,3-bis(tbutylperoxyisopropyl)benzene:5 parts, sulfur:0.3 part, TMTD[tetramethylthiuram disulfide]:1 part, MBT[2-mercaptobenzothiazole]:0.5 part.

### Method for evaluating the adhesion

On a rubber sheet having a thickness of 3 mm, a width of 25 mm and a length of 100 mm, obtained by processing the above-mentioned rubber composition, reinforcing fibers were arranged along the lengthwise direction without space. Then, the same rubber sheet as mentioned above, was placed, so that the reinforcing fibers were sandwiched between the upper and lower rubber sheets. This assembly was heated and pressed by means of a heat pressing apparatus at a temperature of 170°C under a pressure of 42 kgf for 20 minutes, to obtain a test specimen.

With respect to this test specimen, peeling between the reinforcing fiber and the rubber sheet was carried out at a tensile speed of 50 mm/min by means of an autograph, whereby the adhesive strength between the reinforcing fiber and the rubber sheet was measured.

### Evaluation of the bending fatigue resistance

Using the respective fibers for reinforcing rubber products, and the above-mentioned rubber composition, flat belts each having a width of 9 mm, a thickness of 2 mm and a length of 400 mm, were prepared, respectively. Here, each flat belt has a structure wherein one reinforcing fiber is embedded at the center portion of a strip-shaped flat rubber plate, and the embedded reinforcing fiber extends from both ends of the flat rubber plate, respectively, and the portion of flat rubber plate is the belt portion having the above size.

A test was carried out by means of a bending fatigue tester having a structure shown in Fig. 1. In Fig. 1, three flat pulleys 21, 22 and 23 having a diameter of 30 mm are fixed to a reciprocating motion member 2 in a rotatable state, and this reciprocating motion member 2 is slidably mounted on a slide rail 3. The reciprocating motion member 2 is driven by a cylinder shaft 41 of an air cylinder 4, connected thereto, and reciprocates in the direction shown by the arrows in the Figure. Further, the slide rail 3 is fixed to stands 6 and 7, and the air cylinder 4 is also fixed to the stand 6. The stands 6 and 7 are fixed to a platform 8.

Firstly, a flat belt 5 was mounted on the above bending fatigue tester 1, as shown in Fig. 1. Namely, a belt portion 51 of the flat belt 5 was put along the flat pulleys 21, 22 and 23, and one end of the reinforcing fiber 52 extending from the end of the flat belt 5 was put on pulleys 9 and 10 and then fixed to a bolt 12 fixed to the platform 8. The other end of the reinforcing fiber 52 is put on a pulley 11, and then connected to a weight 13 (mass: 11.5 kg) in order to give a tension to the flat belt 5.

And, the reciprocating motion member 2 was moved in a one way moving distance of 180 mm, and along with the reciprocating motion, the portions where the flat belt 5 was in contact with the flat pulleys 21, 22 and 23, were moved to impart bending to the belt portion 51 thereby to subject the flat belt 5 to an bending fatigue test. Further, the atmospheric temperature was maintained to be 120°C by a constant temperature vessel not shown, which was installed to surround the circumferences of the reciprocating motion member 2, the flat pulleys 21, 22 and 23 and the flat belt 5.

The test was carried out in such a manner that by counting one reciprocation of the reciprocating motion member 2 as one time, the reciprocating motion member 2 was reciprocated 1,000,000 times at a speed of 60 times per minute, to let the flat belt 5 undergo bending fatigue. Then, the flat belt 5 was dismounted from the bending fatigue tester 1, and the tensile strength was measured under a condition such that the tensile speed of the measuring machine was 250 mm/min.

The evaluation was made in such a manner that a value obtained by dividing the tensile strength value of the flat belt after the bending fatigue test by the tensile strength value of the flat belt which was prepared under the same conditions by means of the same reinforcing fiber and not subjected to the bending fatigue test, was represented by a percentage, which was taken as the tensile strength retention. This tensile strength retention was used as an index to evaluate the degree of deterioration in the tensile strength of the flat belt by the bending fatigue test.

**Table 1**

| | Ex. 1 | Ex. 2 | Ex. 3 | Ex. 4 | Comp. Ex. 1 | Comp. Ex. 2 |
|---|---|---|---|---|---|---|
| Adhesive strength (N/25mm) | 235 | 196 | 242 | 201 | 133 | 191 |
| Tensile strength retention (%) | 81 | 75 | 82 | 74 | 60 | 68 |

As shown in Table 1, it is evident that the fibers for reinforcing rubber products of the present invention (Examples 1 to 4) have adhesive strength which is equal to or higher than the conventional reinforcing fibers (Comparative Examples 1 and 2) and thus are superior in the adhesion to a rubber composition containing H-NBR using a peroxide as a vulcanizer. Further, it is evident that as compared with the conventional reinforcing fibers, the fibers for reinforcing rubber products of the present invention have a smaller degree of deterioration in the tensile strength even after the bending fatigue test and thus are superior in the bending fatigue resistance when combined with a rubber composition to form a rubber product such as a timing belt.

According to the fiber for reinforcing rubber products of the present invention, the second coating film formed by the second coating agent comprising an uncured phenol resin and a rubber, has both flexibility and excellent adhesion to H-NBR, whereby the adhesion to a rubber composition having H-NBR incorporated, which uses a peroxide as a vulcanizer, will be excellent, and the bending fatigue resistance of the timing belt thereby obtainable can be made excellent.

Further, the second coating film is free from peeling in the process for producing the reinforcing fiber, whereby there will be no trouble of the timing belt caused by partial peeling.

Further, only two coating treatment steps are required, whereby the production cost will not increase as compared with the conventional reinforcing fiber which requires three coating treatment steps.

## Claims

1. Fiber for reinforcing rubber products, which comprises fiber having a first coating film formed by a first coating agent comprising a condensate of resorcinol and formaldehyde, and a rubber latex, wherein the fiber has a second coating film formed by a second coating agent comprising an uncured phenol resin and a rubber, on the first coating film.

2. The fiber for reinforcing rubber products according to Claim 1, wherein the rubber contained in the second coating agent is an acrylonitrile/butadiene copolymer rubber.

3. The fiber for reinforcing rubber products according to Claim 1 or 2, wherein the second coating agent further contains an uncured epoxy resin.

4. The fiber for reinforcing rubber products according to any one of Claims 1 to 3, wherein the rubber latex contained in the first coating agent is a mixture of a latex of vinylpyridine/styrene/butadiene terpolymer and a latex of a halogen-containing polymer.

5. The fiber for reinforcing rubber products according to any one of Claims 1 to 3, wherein the rubber latex contained in the first coating agent is a mixture of a latex of vinylpyridine/styrene/butadiene terpolymer and a latex of an acrylonitrile/butadiene copolymer or a latex of a modified acrylonitrile/butadiene copolymer.

6. The fiber for reinforcing rubber products according to any one of Claims 1 to 5, wherein the base material of the rubber products is a hydrogenated nitrile rubber vulcanized by a peroxide.

7. The fiber for reinforcing rubber products according to any one of Claims 1 to 6, wherein the fiber is glass fiber.

8. A rubber product reinforced by the reinforcing fiber as defined in any one of Claims 1 to 7.

9. A process for producing fiber for reinforcing rubber products, which comprises impregnating fiber with a first coating agent comprising a condensate of resorcinol and formaldehyde, and a rubber latex, followed by drying to produce a coated fiber having a first coating film, then twisting the coated fiber to obtain a twisted yarn, and coating the twisted yarn with a second coating agent comprising an uncured phenol resin and a rubber, followed by drying to form a second coating film on the first coating film.

## Patentansprüche

1. Faser zum Verstärken von Gummiprodukten, die eine Faser mit einem ersten Beschichtungsfilm, der durch ein erstes Beschichtungsmittel aufweisend ein Kondensat aus Resorzin und Formaldehyd sowie ein Gummilatex gebildet ist, aufweist, wobei die Faser einen zweiten Beschichtungsfilm, der durch ein zweites Beschichtungsmittel aufweisend ein ungehärtetes Phenolharz und einen Gummi gebildet ist, auf dem ersten Beschichtungsfilm hat.

2. Faser zum Verstärken von Gummiprodukten nach Anspruch 1, bei der der in dem zweiten Beschichtungsmittel enthaltene Gummi ein Acrylnitril-Butadien-Copolymer-Gummi ist.

3. Faser zum Verstärken von Gummiprodukten nach Anspruch 1 oder 2, bei der das zweite Beschichtungsmittel weiterhin ein ungehärtetes Epoxidharz enthält.

4. Faser zum Verstärken von Gummiprodukten nach einem der Ansprüche 1 bis 3, bei der das in dem ersten Beschichtungsmittel enthaltene Gummilatex eine Mischung aus einem Latex aus Vinylpyridin/Styrol/Butadien-Terpolymer und einem Latex aus einem Halogen enthaltenden Polymer ist.

5. Faser zum Verstärken von Gummiprodukten nach einem der Ansprüche 1 bis 3, bei der das in dem ersten Beschichtungsmittel enthaltene Gummilatex eine Mischung aus einem Latex aus Vinylpyridin/Styrol/Butadien-Terpolymer und einem Latex aus einem AcrylnitrilButadien-Copolymer oder einem Latex aus einem modifizierten Acrylnitril-Butadien-Copolymer ist.

6. Faser zum Verstärken von Gummiprodukten nach einem der Ansprüche 1 bis 5, bei der das Basismaterial der Gummiprodukte ein durch ein Peroxid vulkanisierter, hydrierter Nitrilkautschuk ist.

7. Faser zum Verstärken von Gummiprodukten nach einem der Ansprüche 1 bis 6, bei der die Faser Glasfaser ist.

8. Gummiprodukt, das durch die Verstärkungsfaser nach einem der Ansprüche 1 bis 7 verstärkt ist.

9. Verfahren zum Herstellen einer Faser zum Verstärken von Gummiprodukten, welches aufweist: Imprägnieren der Faser mit einem ersten Beschichtungsmittel aufweisend ein Kondensat aus Resorzin und Formaldehyd, und einem Gummilatex, gefolgt durch Trocknen, um eine beschichtete Faser mit einem ersten Beschichtungsfilm herzustellen, dann Drehen der beschichteten Faser, um ein verdrehtes Garn zu erhalten, und Beschichten des verdrehten Garns mit einem zweiten Beschichtungsmittel aufweisend ein ungehärtetes Phenolharz und einen Gummi, gefolgt durch Trocknen, um einen zweiten Beschichtungsfilm auf dem ersten Beschichtungsfilm zu bilden.

## Revendications

1. Fibre pour renforcer des produits en caoutchouc, qui comprend une fibre ayant un premier film de revêtement formé par un premier agent de revêtement comprenant un condensat de résorcinol et de formaldéhyde, et un latex de caoutchouc, laquelle fibre a un deuxième film de revêtement formé par un deuxième agent de revêtement comprenant une résine phénolique non durcie et un caoutchouc, sur le premier film de revêtement.

2. Fibre pour renforcer des produits en caoutchouc selon la revendication 1, dans laquelle le caoutchouc contenu dans le deuxième agent de revêtement est un caoutchouc de copolymère d'acrylonitrile/butadiène.

3. Fibre pour renforcer des produits en caoutchouc selon la revendication 1 ou 2, dans laquelle le deuxième agent de revêtement contient en outre une résine époxy non durcie.

4. Fibre pour renforcer des produits en caoutchouc selon l'une quelconque des revendications 1 à 3, dans laquelle le latex de caoutchouc contenu dans le premier agent de revêtement est un mélange d'un latex de terpolymère de vinylpyridine/styrène/butadiène et d'un latex d'un polymère halogéné.

5. Fibre pour renforcer des produits en caoutchouc selon l'une quelconque des revendications 1 à 3, dans laquelle le latex de caoutchouc contenu dans le premier agent de revêtement est un mélange d'un latex de terpolymère de vinylpyridine/styrène/butadiène et d'un latex d'un copolymère d'acrylonitrile/butadiène ou d'un latex d'un copolymère d'acrylonitrile/butadiène modifié.

6. Fibre pour renforcer des produits en caoutchouc selon l'une quelconque des revendications 1 à 5, dans laquelle le matériau de base des produits est un caoutchouc de nitrile hydrogéné vulcanisé au moyen d'un peroxyde.

7. Fibre pour renforcer des produits en caoutchouc selon l'une quelconque des revendications 1 à 6, laquelle fibre est une fibre de verre.

8. Produit en caoutchouc renforcé par la fibre de renforcement telle que définie dans l'une quelconque des revendications 1 à 7.

9. Procédé pour produire une fibre pour renforcer des produits en caoutchouc, qui comprend l'imprégnation d'une fibre avec un premier agent de revêtement comprenant un condensat de résorcinol et de formaldéhyde, et un caoutchouc de latex, suivie d'un séchage pour produire une fibre revêtue ayant un premier film de revêtement, puis la torsion de la fibre revêtue pour donner un fil torsadé, et le revêtement du fil torsadé avec un deuxième agent de revêtement comprenant une résine phénolique non durcie et un caoutchouc, suivie d'un séchage pour former un deuxième film de revêtement sur le premier film de revêtement.
